Europäisches Patentamt

European Patent Office

Office européen des brevets

(19)

(11) Veröffentlichungsnummer: **0 141 043**
**B1**

(12) **EUROPÄISCHE PATENTSCHRIFT**

(45) Veröffentlichungstag der Patentschrift: **11.07.90**

(51) Int. Cl.⁵: **F 02 P 5/04**

(21) Anmeldenummer: **84108300.9**

(22) Anmeldetag: **14.07.84**

(54) **Schaltungsanordnung mit Parallelbetrieb von Mikrocomputern in elektronischen Systemen zur Steuerung und/oder Regelung für den Betrieb von Brennkraftmaschinen.**

(30) Priorität: **30.08.83 DE 3331135**

(43) Veröffentlichungstag der Anmeldung:
**15.05.85 Patentblatt 85/20**

(45) Bekanntmachung des Hinweises auf die Patenterteilung:
**11.07.90 Patentblatt 90/28**

(84) Benannte Vertragsstaaten:
**DE FR GB IT SE**

(56) Entgegenhaltungen:
DE-A-2 949 980
DE-A-3 031 360
DE-A-3 111 018
FR-A-2 448 192
GB-A-2 104 247
US-A-4 386 427

ELECTRONIC DESIGN, Band 29, Nr. 10, 14. Mai 1981, Seiten 197-202, Waseca, MN, US; R. HAINES: "Two muCs on one chip split the silicon and the work"

(73) Patentinhaber: **ROBERT BOSCH GMBH**
**Postfach 50**
**D-7000 Stuttgart 1 (DE)**

(72) Erfinder: **Haubner, Georg**
**Ludwigstrasse 1**
**D-8431 Berg (DE)**
Erfinder: **Mayer, Ulrich, Dr. Dipl.-Phys.**
**Fuggerstrasse 27**
**D-7050 Waiblingen (DE)**
Erfinder: **Schleupen, Richard, Dipl.-Ing.**
**Gottlob-Anser-Strasse 6**
**D-7121 Ingersheim (DE)**

## Beschreibung

### Stand der Technik

Die Erfindung geht aus von einem Verfahren nach der Gattung des Hauptanspruchs. Aus der Zeitschrift Elektronik, Heft 26/1979., Seiten 33 bis 38, der DE-OS 30 35 804.4 und der DE-OS 29 03 639.3 ist das Prinzip der parallelen Verwendung von zwei oder mehreren Mikrocomputern auch für den Bereich der Steuerung und/oder Regelung für den Betrieb von Brennkraftmaschinen bereits bekannt. Zweck dieser Verwendung ist jedoch meist die Erhöhung der Betriebssicherheit, d.h. bei Ausfall eines Mikrocomputers wird dessen Aufgabe von einem Parallel-Mikrocomputer übernommen.

Bei schnellaufenden Maschinen oder hohen Zylinderzahlen werden sehr hohe Verarbeitungsraten von Funktionszyklen erforderlich, so daß hierfür nur schnelle und damit kostenaufwendige und störanfälle Mikrocomputer verwendet werden können.

### Ergänzende Beschreibungseinleitung

Aus der DE-OS 30 31 360 ist eine Einrichtung zum Erzeugen von Steuersignalen mit einer Haupt- und einer Hilfsteuereinheit bekannt geworden, wobei die Hilfsteuereinheit parallel zur Hauptsteuereinheit arbeitet und in zeitlichem Abstand den Verbraucher noch nicht beeinflussende Kontrollsignale abgibt. Dadurch soll erkannt werden, ob die Hauptsteuereinheit einwandfrei arbeitet. Treten Fehler auf, wird auf die Hilfssteuereinheit umgeschaltet. Aus dem Artikel "Two uCs on one chip split the silicon and the work" aus Electronic Design, 14. Mai 1981, Seite 197 bis 202 ist es bekannt, daß es bei zwei Mikroprozessorsystemen nicht notwendig ist, sämtliche Bestandteile eines Mikroprozessors doppelt auszuführen. Vielmehr ist es hinreichend, Teile bei einem Zwei-Mikroprozessor-System nur einfach auszulegen, da beide Rechnerkerne dann auf diese Teile zugreifen können.

### Vorteile der Erfindung

Die erfindungsgemäße Verfaren mit den kennzeichnenden Merkmalen des Hauptanspruchs hat demgegenüber den Vorteil, daß bei einer multiplexartigen Verteilung eines Funktionszyklus auf zwei oder mehrere Mikrocomputer (MC) die zeitliche Verarbeitungsdichte, die auf einen einzelnen MC entfällt, geringer wird Diese Entlastung der MC kann nun dazu benutzt werden, um Funktionen, die nicht notwendiger Teil des gemultiplexten Funktionszyklusses sind, außerhalb der Zykluszeit aus zuführen. Nichtzyklusfunktionen können in der Zeit, in der ein MC die Zyklusfunktion ausführt von den Parallel MC ausgeführt werden. Bei n MC wird also die Verarbeitungsdichte, die auf einen einzelnen MC entfällt, verglichen mit der Realisierung mit nur einem einzigen schnellen MC, im Verhältnis 1:n unterteilt. Der Vorteil dieser Lösung ist durch Senkung der Verarbeitungsdichte eine maximal mögliche Senkung der Verarbeitungsgeschwindigkeit der MC, was sich zugunsten von Kosten und Betriebssicherheit auswirkt. Bei Verwendung von drei oder mehreren MC ergeben sich Zeiten, während denen mindestens zwei MC gleichzeitig vom Funktionszyklus befreit sind, und während denen sie zur gleichen Zeit verschiedene Funktionen übernehmen können. Gegenüber der Lösung mit nur einem einzigen schnellen MC bedeutet dies den Vorteil einer insgesamt auch qualitativen Leistungssteigerung durch die erfindungsgemäße Schaltungsanordnung.

Durch die in den Unteransprüchen aufgeführten Maßnahmen sind vorteilhafte Weiterbildungen des im Hauptanspruch angegebenen Verfarens möglich.

### Zeichnung

Zwei Ausführungsbeispiele sind in der Zeichnung dargestellt und in der nachfolgenden Beschreibung näher erläutert. Es zeigen Figur 1 und Figur 2 schaltungstechnische Ausgestaltungen der Ausführungsbeispiele und Figur 3 ein mögliches Signaldiagramm zur Erläuterung der Wirkungsweise.

### Beschreibung der Ausführungsbeispiele

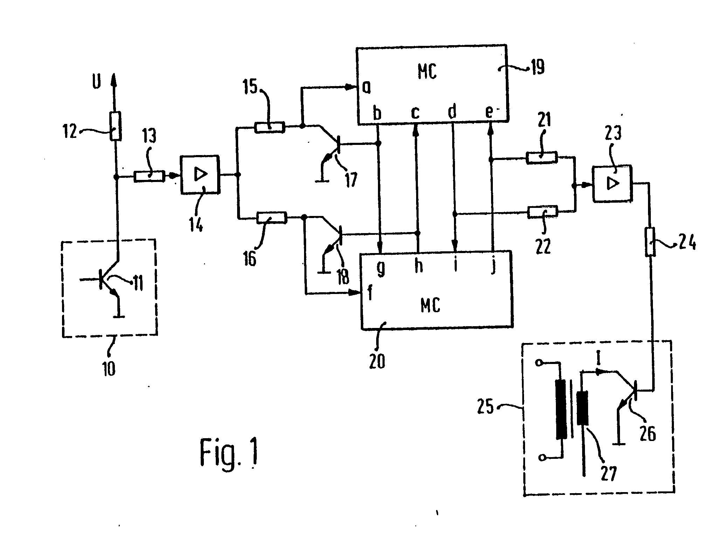

In dem in Figur 1 dargestellten ersten Ausführungsbeispiel werden zwei Mikrocomputer (MC) 19 und 20 zeitversetzt parallel in einer kennliniengesteuerten Zündelektronik für schnellaufende Brennkraftmaschinen oder Maschinen mit hohen Zylinderzahlen eingesetzt.

Am Kollektor eines Transistors 11 in einem Hallgeber 10 einer Motorzündanlage liegen Geberimpulse an. Aus Gründen der Übersichtlichkeit wird in Figur 1 mit dem Transistor 11 nur der Endstufentransistor des Hallgebers 10 angegeben. Im Prinzip kann der Hallgeber 10 auch durch einen induktiv oder konstaktgesteuerten Impulsgeber ersetzt werden. Der Kollektor des Transistors 11 liegt über einen Widerstand 12 an einer positiven Versorgungsspannung U und über einen Widerstand 13 am Eingang eines Schaltverstärkers 14. Der Ausgang des Schaltverstärkers 14 liegt über einen Widerstand 15 am Kollektor eines Transistors 17, an einem Eingang (a) des MC 19, über einen Widerstand 16 am Kollektor eines Transistors 18 sowie an einem Eingang (f) des MC 20. Die Emitter der Transistoren 11, 17, 18 liegen an Masse. Ein Ausgang (b) des MC 19 ist mit der Basis des Transistors 17 und einem Eingang (g) des MC 20 verbunden. Ein weiterer Ausgang (h) des MC 20 ist mit der Basis des Transistors 18 und einem Eingang (c) des MC 19 verbunden.

Figur 1 zeigt eine Schaltungsanordnung zur Steuerung eines Zündstromes I. Ein Ausgang (d) des MC 19 ist mit einem Eingang (i) des MC 20 und über einen Widerstand 22 mit dem Eingang eines Schaltverstärkers 23 verbunden. Ein Ausgang (j) des MC 20 ist mit einem Eingang (e) des MC 19 und über einen Widerstand 21 mit dem Eingang des Schaltverstärkers 23 verbunden. Der Ausgang des Schaltverstärkers 23 ist über einen Widerstand 24 mit der Basis eines Endstufen-Transistors 26 einer Zündanlage 25 verbunden.

Aus Gründen der Übersichtlichkeit wird mit dem Endstufentransistor 26, der Zündspule 27 und dem Zündstrom I nur ein Teil der Zündanlage 25 dargestellt. Der Emitter des Transistors 26 liegt an Masse und dessen Kollektor an der Primärwicklung der Zündspule 27. Durch diese Primärwicklung und die Kollektor-Emitter-Strecke des Transistors 26 fließt der Zündstrom I.

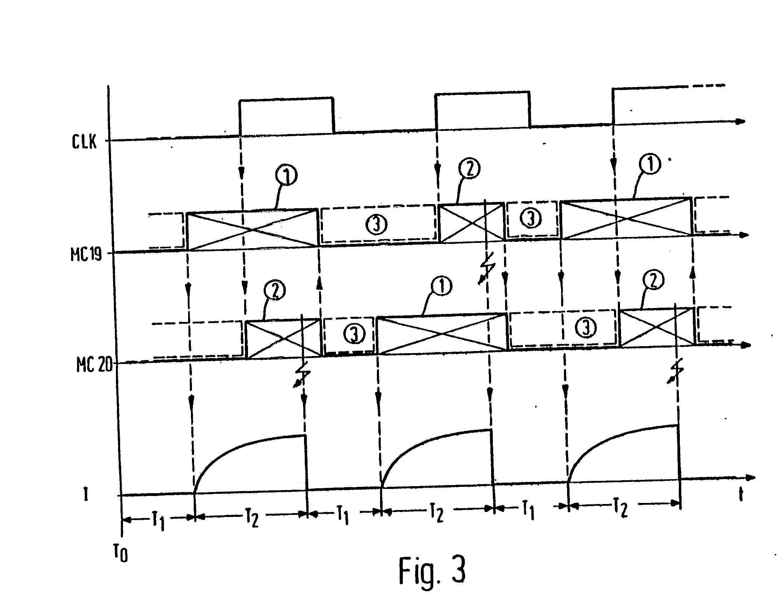

Die Wirkungsweise der Schaltungsanordnung nach Figur 1 wird nun anhand eines Funktionsablaufes nach Figur 3 erläutert.

Die Geberimpulse CLK am Kollektor des Hallgeber-Transistors 11 werden durch den Verstärker 14 vom Ausgangskreis des Hallgebers 10 getrennt und liegen nun verstärkt an den Widerständen 15, 16. Zeile 1 von Figur 3 zeigt den zeitlichen Verlauf der Geberimpulse CLK, die am Ausgang des Schaltverstärkers 14 anliegen. Zum Zeitpunkt T0 der letzten Zündung sei Ausgang (h) des MC 20 auf Low-Potential L und Ausgang (b) des MC 19 auf High-Potential H. Die Kollektor-Emitter-Strecke des Transistors 17 ist also niederohmig, die des Transistors 18 hochohmig, so daß der Eingang (a) des MC Io über Transistor 17 fest auf L gezogen bleibt, und so daß am Eingang (f) des MC 20 über Widerstand 16 der Geberimpuls CLK liegt. Ausgang (d) des MC 19 und Ausgang (j) des MC 20 liegen beide auf L, so daß am Eingang und damit Ausgang des Schaltverstärkers 23 und an der Basis des Transistors 26 ebenfalls L anliegt, die Kollektor-Emitter-Strecke des Transistors 26 also hochohmig ist und kein Zündstrom I fließt.

Nach einer kurzen Stromsperrzeit T1 nach T0 beginnt der MC 19 mit einem Betriebsprogramm 1 (Figur 3, Zeile 2), setzt Ausgang (d) auf H, der Schaltverstärker 23 verstärkt und der Transistor 26 öffnet sich, so daß sich durch die Primärwicklung der Zündspule 27 der Strom I aufbauen kann (Figur 3, Zeile 4). Die positive Flanke eines Geberimpulses CLK am Eingang (f) triggert das Betriebsprogramm 2 in MC 20 (Figur 3, Zeile 3). Der Ausgang (j) des MC 20 geht auf H und meldet über den Eingang (e) dem MC 19 den Ausgang (d) auf L zurückzusetzen. Während dieser Zeit bleibt der Transistor 26 über den Schaltverstärker 23 geöffnet. In einem Betriebsprogramm 2 errechnet der MC 20 nun aus den momentanen Betriebsdaten und den festgespeicherten Daten der Brennkraftmaschine nach einem der bekannten Verfahren den optimalen Zündzeitpunkt. Nach dieser berechneten Zeit T1 + T2 setzt der MC 20 seinen Ausgang (j) auf L zurück. Der Eingang und damit der Ausgang des Schaltverstärkers 23 und die Basis des Transistors 26 sind auf L. Der Zündstrom I wird unterbrochen und dadurch wird sekundärseitig an der Zündspule 27 eine Zündspannung induziert. Am Eingang (e) erkennt der MC 19 das Rücksetzen auf L von Ausgang (j) des MC 20 und beendet Betriebsprogramm 1. Ausgang (h) des MC 20 wird nun auf H gesetzt, der Transistor 18 wird niederohmig, über seinen Eingang (c) erkennt dies der MC 19 und setzt seinerseits seinen Ausgang (b) auf L. Betriebsprogramm 2 wird nun beendet. Die Geberimpulse CLK liegen nun über den Widerstand 15 am Eingang (a) des MC 19, während der Eingang (f) des MC 20 über den Transistor 18 niederohmig an Masse liegt.

Es liegt nun ein zum Anfangszustand beim Zeitpunkt T0 symmetrisches Spannungs- und Signalverhältnis vor. Nun übernimmt der MC 20 nach der Stromsperrzeit T1 das Betriebsprogramm 1, der Zündstrom I wird aufgebaut, der Geberimpuls triggert in MC 19 das Betriebsprogramm 2, das zum optimalen Zündzeitpunkt den Zündstrom I ausschaltet und sämtliche Pegel und Signale identisch zum Zustand beim Zeitpunkt T0 setzt. Danach wiederholt sich der gesamte Vorgang zyklisch wie ab dem Zeitpunkt T0.

Der Teil der Schaltungsanordnung nach Figur 1 um die beiden Transistoren 17, 18 und die Widerstände 15, 16 mit den Ein- und Ausgängen (a), (b), (c) und (f), (g), (h) stellt also einen Multiplexer mit einem Eingang und zwei Ausgängen dar, der die Geberimpulse CLK abwechselnd den MC 19 und 20 zuführt. Während der zeitlichen Lücken, die bei MC 19 und 20 zwischen den Betriebsprogrammen 1 und 2 auftreten, wird ein Betriebsprogramm 3 niederer Priorität (beispielsweise zur Überwachung der Beleuchtungsanlage in einem Kraftfahrzeug oder ähnliches) ausgeführt (Figur 3, Zeilen 2 und 3).

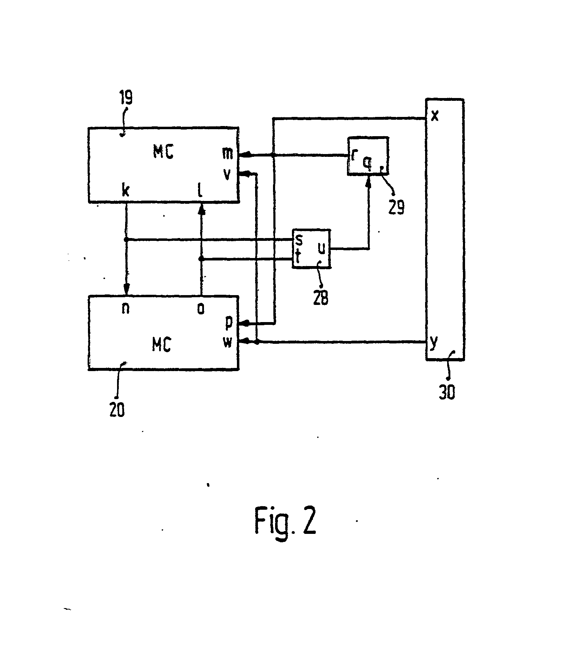

Figur 2 zeigt als Ausführungsbeispiel eine Schaltungsanordnung zur Retriggerung beider Mikrocomputer MC 19 und 20. Ein Ausgang (k) des MC 19 ist mit einem Eingang (n) des MC 20 und einem Eingang (s) eines Flipflops 28 verbunden. Ein Ausgang (o) des MC 20 ist mit einem Eingang (1) des MC 19 und einem Eingang (t) des Flipflops 28 verbunden. Der Ausgang (u) des Flipflops 28 ist mit einem Eingang (q) einer Retriggerschaltung 29 verbunden, deren Ausgang (r) wiederum mit einem Eingang (m) des MC 19 und einem Eingang (p) des MC 20 verbunden ist.

Treten zu irgendeinem Zeitpunkt während der Betriebsprogramme Fehler beim MC 19 und/oder beim MC 20 auf, so kann der MC 19 über den Ausgang (k) dem MC 20 über dem Eingang (n) hiervon Meldung machen, oder entsprechend der MC 20 über den Ausgang (o) dem MC 19 über den Eingang (1), oder beide können gemeinsam über das Flipflop 28 den Eingang (q) der Retriggerschaltung 29 betätigen die zum richtigen Zeitpunkt durch ihren Ausgang (r) die Reset-Eingänge (m) des MC 19 und (p) des MC 20 betätigt und hierdurch eine Reinitialisierung und einen automatischen Wiederanlauf ermöglicht.

In Figur 2 ist ebenfalls das Beispiel einer Kommunikation mit einem zentralen Bord-Rechner in einem, von einer erfindungsgemäß geregelten Brennkraftmaschine angetriebenen, Kraftfahrzeug dargestellt. Der Ausgang (r) der Retriggerschaltung 29 ist mit einem Eingang (x) eines Bord-Rechners 30 verbunden, dessen Ausgang (y) mit einem Eingang (w) des MC 20 und einem Eingang (v) des MC 19 verbunden ist.

Bei einem auftretenden Reset-Vorgang über den Ausgang (r) der Retriggerschaltung 29 erhält der zentrale Bord-Rechner 30 hiervon über den Eingang (x) Meldung. Will der Bord-Rechner 30 seinerseits den MC 19 und 20 eine Meldung machen (über eine vorzunehmende Zylinderabschaltung oder ähnliches), so betätigt er über einen Ausgang (y) die Eingänge (w) des MC 20 und (v) des MC 19.

## Patentansprüche

1. Verfahren zur elektronischen Steuerung und/oder Regelung zum Betrieb von Brennkraftmaschinen mit mindestens zwei Mikrocomputern (19, 20), die sich die Steuerungs- und/oder Regelungsaufgabe teilen und mit mindestens einem Signalgeber (10), der zyklische Signale über den Betriebszustand der Brennkraftmaschine abgibt, dadurch gekennzeichnet, daß die Signale des Signalgebers (10) abwechselnd einem der Mikrocomputer (19, 20) zugeführt werden, daß nach der Zuführung der Signale des Signalgebers (10) der betreffende Mikrocomputer (19) ein an den Zyklus des Betriebs der Brennkraftmaschine gebundenes, immer gleichartiges Betriebsprogramm (2) beginnt und ein Betriebsprogramm niedrigerer Priorität (3) beendet, daß die Signale des Signalgebers (10) durch das an den Zyklus des Betriebs der Brennkraftmaschine gebundene, immer gleichartige Betriebsprogramm (2) des betreffenden Mikrocomputers (19) auf einen anderen Mikrocomputer geschaltet werden, wenn durch das Betriebsprogramm (2) eine Auslösung eines zu steuernden Vorganges der Brennkraftmaschine bewirkt wurde, und daß die Mikrocomputer (19, 20) Betriebsprogramm niedrigerer Priorität (3) durchführen, wenn das an den Zyklus des Betriebs der Brennkraftmaschine gebundene immer gleichartige Betriebsprogramm (2), dem jeweils in einem zeitlichen Abstand ein weiteres, ebenfalls an den Zyklus der Brennkraftmaschine gebundenes, für sich genommen gleichartiges Betriebsprogramm (1) folgt, abgeschlossen ist.

2. Verfahren nach Anspruch 1, dadurch gekennzeichnet, daß mindestens ein mechanischer oder elektronischer Multiplexer (17, 18) ein zu verarbeitendes Signal je einem der Mikrocomputer (19, 20) als Eingangssignal zuleitet und daß zwischen den Mikrocomputern (19, 20) Signalverbindungen zur Erkennung desjenigen Mikrocomputers (19, 20) dienen, der gerade die Zyklusfunktion ausführt.

3. Verfaren nach Anspruch 2, dadurch gekennzeichnet, daß mindestens eine Signalverbindung mindestens ein externes Signal den Mikrocomputern (19, 20) gleichzeitig zuleitet.

4. Verfaren nach einem der Ansprüche 2 oder 3, dadurch gekennzeichnet, daß mindestens eine Schaltungsanordnung (29) mindestens ein Ausgangssignal eines der Mikrocomputer (19, 20) mit mindestens einem Ausgangssignal eines anderen Mikrocomputers (19, 20) zu mindestens einem Folgesignal verknüpft.

5. Verfaren nach Anspruch 4, dadurch gekennzeichnet, daß das Folgesignal mindestens einen der Mikrocomputer (19, 20) in einen vorher definierten Zustand versetzt.

6. Verfaren nach Anspruch 5, dadurch gekennzeichnet, daß ein Meldesignal über die veranlaßte Setzung in einen vorher definierten Zustand gebildet wird.

## Revendications

1. Procédé d'une commande et/ou d'une régulation électronique du fonctionnement de moteurs à combustion interne, mettant en oeuvre au moins deux micro-ordinateurs (19, 20) qui se répartissent la tâche de commande et/ou de régulation et comportant au moins un transmetteur de signaux (10) émettant des signaux cycliques concernant l'état de fonctionnement du moteur à combustion interne, caractérisé en ce que les signaux du transmetteur de signaux (10) sont amenés alternativement à l'un des micro-ordinateurs (19, 20), en ce, qu'après l'amenée des signaux du transmetteur de signaux (10), le micro-ordinateur (19) concerné débute un programme de fonctionnement (2), qui est toujours du même type et lié au cycle de fonctionnement du moteur à combustion interne, et achève un programme de fonctionnement de priorité (3) inférieure, en ce que les signaux du transmetteur de signaux (10) sont connectés sur un autre micro-ordinateur, au moyen du programme de fonctionnement (2) du micro-ordinateur (19) concerné, programme qui est toujours du même type et lié au cycle de fonctionnement du moteur à combustion interne, lorsque, du fait du programme de fonctionnement (2), il a été provoqué un déclenchement d'un processus, devant être commandé, du moteur à combustion interne, et que les micro-ordinateurs (19, 20) exécutent des programmes de fonctionnement de priorité (3) inférieure, lorsque le programme de fonctionnement (2), qui est toujours du même type et lié au cycle de fonctionnement du moteur à combustion interne, est terminé, programme que suit chaque fois, avec un certain décalage temporel, un autre programme de fonctionnement (1), qui est en soi du même type, également lié au cycle du moteur à combustion interne.

2. Procédé selon la revendication 1, caractérisé en ce qu'au moins un multiplexeur (17, 18) mécanique ou électronique amène un signal traité à chacun des micro-ordinateurs (19, 20), à titre de signal d'entrée et en ce qu'entre les micro-ordinateurs (19, 20), des liaisons de signalisation servent à l'identification du micro-ordinateur (19, 20) qui exécute justement le fonctionnement de cycle.

3. Procédé selon la revendication 2, caractérisé en ce qu'au moins une liaison de signalisation amène simultanément au moins un signal aux micro-ordinateurs (19, 20).

4. Procédé selon l'une des revendications 2 ou 3, caractérisé en ce qu'au moins un circuit (29) combine logiquement au moins un signal de sortie de l'un des micro-ordinateurs (19, 20) avec au moins un signal de sortie d'un autre micro-ordinateur (19, 20) pour produire au moins un signal séquentiel.

5. Procédé selon la revendication 4, caractérisé en ce que le signal séquentiel décale au moins l'un des micro-ordinateurs (19, 20) en un état défini au préalable.

6. Procédé selon la revendication 5, caractérisé en ce qu'un signal d'information est formé par le fait de s'être mis dans un état défini au préalable.

## Claims

1. Method of electronic open-loop and/or closed-loop control for the operation of internal-combustion engines having at least two microcomputers (19, 20) which share the open-loop and/or closed-loop control task, and having at least one signal generator (10), which emits cyclic signals on the operating state of the internal-combustion engine, characterized in that the signals of the signal generator (10) are fed alternately to one of the microcomputers (19, 20), in that, after the feeding of the signals of the signal generator (10), the microcomputer (19) concerned begins an operating program (2), which is always the same and is tied to the cycle of the operation of the internal-combustion engine, and terminates an operating program of lower priority (3), in that the signals of the signal generator (10) are switched by the operating program (2), which is always the same and is tied to the cycle of the operation of the internal combustion engine, of the microcomputer (19) concerned to another microcomputer whenever a triggering of a process to be controlled of the internal-combustion engine has been effected by the operating program (2), and in that the microcomputers (19, 20) implement an operating program of lower priority (3) whenever the operating program (2), which is always the same and is tied to the cycle of the operation of the internal combustion engine, and which is followed in each case after a time interval by a further operating program (1) which for itself is the same and is likewise tied to the cycle of the internal-combustion engine, is concluded.

2. Method according to Claim 1, characterized in that at least one mechanical or electronic multiplexer (17, 18) sends a signal to be processed to each of the microcomputers (19, 20) as input signal and in that, between the microcomputers (19, 20) signal connections serve to detect the particular microcomputer (19, 20) which is executing the cycle function at that time.

3. Method according to Claim 2, characterized in that at least one signal connection simultaneously sends at least one external signal to the microcomputers (19, 20).

4. Method according to one of Claims 2 or 3, characterized in that at least one circuit arrangement (29) combines at least one output signal of one of the microcomputers (19, 20) with at least one output signal of another microcomputer (19, 20) to form at least one follow-up signal.

5. Method according to Claim 4, characterized in that the follow-up signal sets at least one of the microcomputers (19, 20) into a previously defined state.

6. Method according to Claim 5, characterized in that an indicating signal on the instigated setting into a previously defined state is formed.

Fig. 1

Fig. 2

Fig. 3